Europäisches Patentamt

European Patent Office

Office européen des brevets

(19)

(11) Veröffentlichungsnummer: **0 145 702**
**B1**

(12) **EUROPÄISCHE PATENTSCHRIFT**

(45) Veröffentlichungstag der Patentschrift: **16.08.90**

(51) Int. Cl.⁵: **B 23 P 15/28**

(21) Anmeldenummer: **84890205.2**

(22) Anmeldetag: **31.10.84**

(54) **Drehendes Fräs- bzw. Schneidwerkzeug.**

(30) Priorität: **09.11.83 AT 3951/83**

(43) Veröffentlichungstag der Anmeldung:
**19.06.85 Patentblatt 85/25**

(45) Bekanntmachung des Hinweises auf die
Patenterteilung:
**16.08.90 Patentblatt 90/33**

(84) Benannte Vertragsstaaten:
**BE CH DE FR GB IT LI LU NL SE**

(56) Entgegenhaltungen:
**AT-B- 327 649**
**FR-A- 510 128**
**US-A-3 290 936**
**US-A-3 615 905**
**US-A-3 737 981**

(73) Patentinhaber: **BÖHLER Gesellschaft m.b.H.**
**Elisabethstrasse 12**
**A-1010 Wien (AT)**

(72) Erfinder: **Kaiserfeld, Hans, Dipl.-Ing.**
**Alter Sommer 12**
**A-8670 Krieglach (AT)**
Erfinder: **Kügler, Alfred, Dr.**
**Pretulstrasse 16 N**
**A-8680 Mürzzuschlag (AT)**
Erfinder: **Riha, Manfred, Dipl.-Ing.**
**Reinbachergasse 1 G**
**A-8680 Mürzzuschlag (AT)**

EP 0 145 702 B1

Courier Press, Leamington Spa, England.

**Beschreibung**

Die Erfindung betrifft ein drehendes Fräs- bzw. Scheidwerkzeug aus ledeburitischem Stahl mit vorzugsweise Dicke von über 4 mm, insbesondere von 4—40 mm, und Durchmesser von über 40 mm, insbesondere von 50—315 mm, aufweisendem, in wesentlichen scheibenförmigen Werkzeugkörper mit einstückig mit ihm ausgebildeten Fräs- bzw. Scheidelementen und ein Verfahren zu dessen Herstellung.

Derartige Werkzeuge sind z.B. als Kreis-, Scheiben-, Nuten- und Profilfräser für verschiedenste Zwecke der Materialbearbeitung bekannt. Sie sind hohen und insbesondere, wenn unterbrochene Schnitte auftreten, stark wechselnden, höchsten mechanischen Beanspruchungen ausgesetzt. Dazu kommt, daß insbesondere bei größeren Durchmessern, die auf Umfang und Fräselemente, Zähne u.dgl. wirkenden Zentrifugalkräfte die mechanischen Bearbeitungskräfte überlagern und die Beanspruchung weiter vorgrößern. Insbesondere, wenn die Werkzeug-Durchmesser etwa 40 oder 50 mm übersteigen, treten bei üblichen Schnellarbeitsstählen ungleichmäßiger, relativ hoher Verschleiß und gegebenenfalls Brüche an Zähnen und Werkzeugen auf, was zu Stillstandzeiten und gegebenenfalls auch zur Gefährdung von Personal führt. Im Hinblick auf kostengünstige Produktion ist versucht worden, solche Fräswerkzeuge aus Blechen aus Schnellarbeitsstählen zu fertigen. Dabei hat es sich gezeigt, daß bei den extremen Beanspruchungen Inhomogenitäten des Gefüges, insbesondere in der Verteilung der härtzähen Karbid-Einschlüsse zu den hohen Verschleißwerten und Störfällen führten. Es konnten für die Fertigung der Scheiben der Werkzeuge, wenn überhaupt, höchstens ausgewählte, sehr begrenzte Bereiche einer Blechtafel herangezogen werden.

An dieser Stelle sei erwähnt, daß es Versuche gegeben hat, siehe AT—PS 304.999, bei geschmiedetem und gewalztem ledeburitischem Stabstahl Gefüge-Struktur-Homogenisierung zu erreicher, indem nach einem ganz speziellen Elektroschlakke-Umschmelzprozeß eine Bramme hergestellt wird, die dann durch Schmieden in Richtung von deren Hauptasche auf quadratischen oder runden Querschnitt stauchverformt wird. Das erhaltene Halbzeug wird durch verformung quer zur vorherigen Hauptachse auf einen gewünschten Endquerschnitt verformt. Bei diesem Verfahren wird ein Material erhalten, welches in Richtung der zweiten Verformung bevorzugt gerichtete, also anisotrope Gefügstruktur aufweist. Drehende Fräser aus solchem Material hätten daher im wesentlichen die gleichen gravierenden Nachteile wie solche aus üblich hergestellten Blechen.

Die Erfindung hat sich nun zur Aufgabe gestellt, ein drehendes Fräs- bzw. Schneidwerkzeug aus Stahl mit im wesentlichen scheibenförmigen Werkzeugkörper un einstückig mit ihm ausgebildeten Fräs- bzw. Schneidelementen zu schaffen, das in Ebenen senkrecht zu der Drehachse weitgehend isotrope Karbidverteilung aufweist, sodaß auch bei Werkzeugen größerer Dimension ungleichmäßiger Verschleiß bzw. Brüche trotz der hohen Beanspruchungen nicht mehr eintreten. Es wurde gefunden, daß sich dieses Ziel erreichen läßt, wenn ledeburitisches Stahl-Vormaterial im wesentlichen in zwei Walzrichtungen verformt wird.

Gegenstand der Erfindung ist demnach ein drehendes Fräs- bzw. Schneidwerkzeug der eingangs genannten Art, das dadurch gekennzeichnet ist, daß das Werkzeug mit den Scheid- bzw. Fräselementen aus in mehr als zwei Bearbeitungsgängen in zumindest zwei, auf entlang von bzw. parallel zu aufeinander im wesentlichen normalen Geraden, insbesondere Richtungen, verlaufende Gradienten querschnittsflächen- bzw. dickenreduzierend verformtem Blech, insbesondere aus Schnellarbeitsstahl, mit in zu den Scheiben-Flankenebenen im wesentlichen parallelen Ebenen weitgehend isotroper Karbid-Verteilung gefertigt ist. Aus wirtschaftlichen Gründen ist es bevorzugt, Bleche der genannten Art einzusetzen, welche entlang zweier aufeinander normaler Geraden in mehrmaligen Arbeitsgängen, insbesondere durch Walzen und/oder Schmieden streckverformt sind. Es hat sich gezeigt, daß die erfindungsgemäßen Werkzeuge sich auch bei größeren Dimensionen, z.B. im Bereich von 40 bis 500 mm Durchmesser durch hohe Verschleiß- und Bruch-Sicherheit auszeichnen. Infolge der plastischen Verformungen, di sich letztlich auf materialstreckende Materialdickenreduktionen in zwei im wesentlichen aufeinander senkrechten Richtungen zurückführen lassen, wird im wesentlichen zu den beiden Seitenflächen der Werkzeug-Scheibe parallelen Ebenen eine karbidstruktur mit wesentlichen verbesserter Flächenisotropie erreicht. Diese bringt, wie gefunden wurde—wesentliche Standzeiterhöhungen mit Werten von oft bis zu 40%, wobei diese Werte bei Fräsern kleinerer Durchmesser gegebenenfalls noch überschritten werden können. Weiters ist der Kolkverschleiß geringer, ein Ausbrechen von Zähnen ist praktisch ausgeschaltet und nach erfolgtem Verschleiß eignen sich die Werkzeuge für ein Nachschleifen ohne Probleme.

Es wurde gefunden, daß insbesondere ledeburitische Schnellarbeitsstähle mit folgenden Legierungsbestandteilen für die Erfindungsgemäßen Werkzeuge im Hinblick auf Gebrauchseigenschaften und ökonomischen Einsatz besonders geeignet sind:

# EP 0 145 702 B1

TABELLE 1

| Leg. Element \ Stahl Nr. | Legierungsgehalt in Masse-% | | | |
|---|---|---|---|---|
| | 1 | 2 | 3 | 4 |
| C | 0,65— 0,80 | 1,05— 1,15 | 0,78—0,94 | 0,88—0,96 |
| Si | max. 0,45 | max. 0,45 | max. 0,45 | max. 0,45 |
| Mn | max. 0,40 | max. 0,40 | max. 0,40 | max. 0,40 |
| Cr | 3,75— 4,50 | 3,75— 4,50 | 3,75—4,50 | 4,00—4,50 |
| Mo | — | 9,00—10,00 | 4,50—5,50 | 4,70—5,20 |
| V | 0,90— 1,30 | 0,95— 1,35 | 1,70—2,20 | 1,70—2,00 |
| W | 17,25—18,75 | 1,15— 1,85 | 5,50—6,75 | 6,00—6,70 |
| Co | — | 7,50— 8,75 | — | 4,50—5,00 |

Weiterer wesentlicher Erfindungsgegenstand ist ein Verfahren zur Herstellung von wie oben beschriebenen drehenden Fräs- bzw. Scheidwerkzeugen, welches im wesentlichen darin besteht, daß ein Vormaterial aus ledeburitischem Stahl, insbesondere Schnellarbeitsstahl, in warmen Zustand mit mehr als zwei Bearbeitungsgängen in zumindest zwei, auf entlang von bzw. parallel zu zwei aufeinander im wesentlichen normalen Geraden, insbesondere Richtungen, verlaufende Gradienten einer Material-Querschnittsflächen- bzw. Dickenreduktion zurückführbaren Bearbeitungs-Richtungen hin querschnittsflächen- bzw. dickenreduzierend zu einem Blech verformt wird, aus welchem der Werkzeugkörper mit den Fräs- bzw. Schneidelementen gefertigt wird.

Ein derartig gefertigtes Werkzeug zeigt die schon erwähnten Vorteile in hohem Maße.

Besondere Zäheigenschaften lassen sich erreichen, wenn die querschnittsflächen- bzw. dickenreduzierenden Streck-Verformungen bei Temperaturen von 1150 bis 750°C vorgenommen werden.

Zur Erreichung hochdispersion Karbids mit homogener Verteilung und damit von Werkzeugen mit besonderer mechanischer und Verschleiß-Festigkeit, ist es günstig, wenn bei dem querschnittsflächen- bzw. dickenreduzierenden plastischen Verformen ein Verhältnis von Verformung in einer einem der Querschnitts- bzw. Dickenreduktions-Gradienten entsprechenden Richtung zur Verformung in einer im wesentlichen dazu senkrechten, dem anderen Gradienten entsprechenden Richtung von 0,8 bis 2,2 eingestellt wird. Auf diese Weise kann die Anisotropie im Vormaterial berücksichtigt werden.

Es has sich gezeigt, daß für Werkzeuge mit Scheibendicken von über 25 mm, insbesondere von 25 bis 40 mm, das Vormaterial bis zum Erhalt des Werkzeug-Ausgangsmaterials günstigerweise in mehreren Bearbeitungsstufen jeweils in den zueinander im wesentlichen normalen Streckrichtungen einer, vorzugsweise mindestens, 6- bis 8-fachen Verformung unterworfen wird.

Für Werkzeuge mit Scheibendicken von unter 25 mm, ist es zur Ereichung hoher Stabilität und Festigkeit vorteilhaft, das Vormaterial bis zum Erhalt des Werkzeuges in mehreren Bearbeitungsstufen eine vorzugsweise mindestens, 10-fachen Verformung zu unterwerfen.

Anhand der Figuren wird die Erfindung näher erläutert.

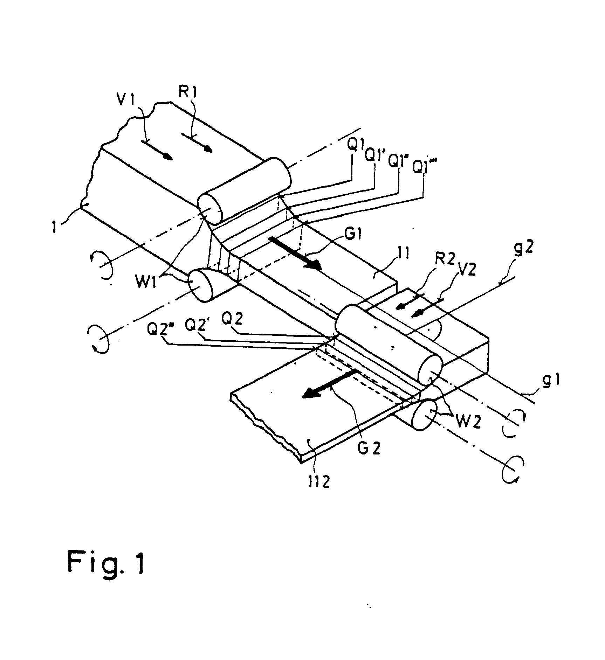

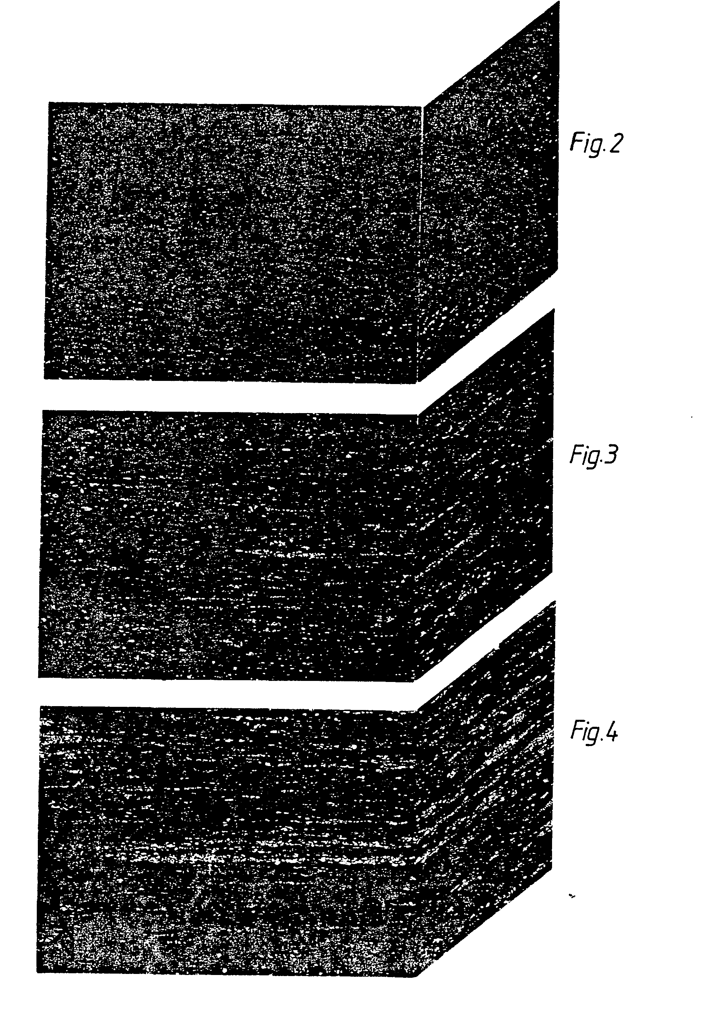

Es zeigen Fig. 1 eine schematische Skizze zu der Art und Weise, wie das Ausgangsblech für das erfindungsgemäße Werkzeug bevorzugt verformt ist, während die Figuren 2 bis 4 Ausschnitt-Fotografien von Materialschnitten in aufeinander normalen, parallel zur Achse eines scheibenförmigen Fräswerkzeuges liegenden Ebenen in anschaulicher Schrägansicht zeigen.

Fig. 1 zeigt, wie ein Vormaterial, vorzugsweise Vormaterialblech 1, mittels Walzen W1 unter Bewirkung einer in Richtung R1 gerichteten Vorschubkraft V1 querschnittsreduzierend in Richtung R1 verformt wird. Zur Veranschaulichung sind einige Material-Querschnitte Q1, Q1', Q1'', Q1''', in der Zone der Dickenreduktion angedeutet und es ist dort der Gradient der Querschnittsflächen- bzw. Dickenreduktion G1 dargestellt, welcher hier in seiner Richtung mit jener R1 einer ersten querschnittsreduzierenden Walzverformung übereinstimmt. Das nun querschnittsreduzierte Material 11 wird unter Aufbringung einer streckenden Vorschubkraft V2 im wesentlichen senkrecht zur vorher aufgebrachten Kraft V1 mittels senkrecht zu den Walzen W1 gerichteten Walzen W2 nochmals querschnittsreduzierend in Richtung R2 zu Blech 112 veformt. Auch dort ist wieder anhand einiger Schnitte Q2, Q2', Q2'' quer zur Vorschubrichtung R2 angezeigt, wie der Gradient der Querschnittsflächen- bzw. Dickenreduktion G2 in einer Geraden g2 liegt, welche Senkrecht zu jener Geraden g1 angeordnet ist, in welcher der Gradient G1 der ersten Querschnittsfläche bzw. Dickenreduktion liegt. Auch bei diesem Bearbeitungsgang ist die Richtung des Gradienten G2 mit der Richtung des Walz-Vorschubes V2 übereinstimmend. Es sei betont, daß es wesentlich ist, daß jedenfalls die beiden Gradienten G1 und G2 auf bzw. parallel zu zueinander im wesentlichen senkrechten Geraden g1, g2 angeordnet sind. Dies kann gegebenenfalls auch durch Walzen in mehr als zwei Richtungen erreicht werden. Es sollen jedenfalls die dickenreduzierenden Walzvorgänge, die konkret in verschiedenen Richtungen vorgenommen werden können, auf die zwei genannten Gradienten G1, G2 zurückführbar sein. Dabei ist selbstverständlich inkludiert, daß die erläuterten Walzvorgänge jeweils auch in zu den Richtungen R1 und R2 entgegengesetzt Richtungen, jedoch jeweils im Verlauf der oder parallel zu der Geraden g1 und g2 vorgenommen werden können. Für das Gefüge vorteilhaft ist es, darauf zu achten, daß die relativen Querschnittsreduktionen jeweils in einer der Verformungs-Richtungen R1, R2 nicht wesentlich überwiegen, sodaß echte Flächenisotropie der Karbidverteilung gesichert ist. Ergänzend sei erwähnt, daß auch Schmiede-, bzw. gemischte Schmeide- und Walzverformung statt des Walzens möglich sind.

Aus Fig. 2 bis 4 ist ersichtlich, wie in einer Schnittebene in Richtung quer zu den Flankenflächen einer aus Blech gefertigten, erfindungsgemäßen Frässcheibe von 16 mm Dicke und einer darauf senkrechten Schnittebene jeweils am Rand in 1/4-Blechdicken-Tiefe und in Blechmitte die feinteiligen Karbide parallelflächig angeordnet und verteilt sind, und somit eine Gefügeisotropie jeweils in Ebenen parallel zu den Hauptflächen des Stahl-Bleches bzw. der Flankenflächen der Frässcheibe gegeben ist. Die Vergrößerung ist 100fach.

Anhand der folgenden Tests werden Erfindung und deren Vorteile näher erläutert.

Getestet wurden jeweils drei Scheibenfräser mit 195 mm Durchmesser und 16 mm Material-Stärke aus üblich gefertigtem, unter 10-facher Verformung hergestelltem Walz-Blech und ebensolche drei Fräser aus Blech, das mit 10facher Walzverformung in zwei aufeinander senkrecht stehenden Walzrichtungen in ausgewogener Folge hergestellt worden ist. Zum Einsatz kam ledeburitischer Schnellarbeits-Stahl Nr. 1 der vorangegangener Tabelle 1. Gebrauchstests mit diesen Fräsern sowie weiters der Einzahnscheiben-Test zeigten, daß das mit dem in zwei aufeinander senkrechten Richtungen gewalzten Stahl-Blech hergestellte Werkzeug eine im Mittel um 33% erhöhte Standzeit zeigte.

Ähnliche Vergleichsversuche mit Fräsern 2 mit 30 mm Blechstärke und 180 mm Durchmesser nach jeweils 8-facher Verformung mit Stählen Nr. 1—4 gemäß Tabelle 1 ergaben ebenfalls wesentliche Standzeitverbesserungen, ebenso solche mit Fräsern 1 aus Stählen 2—4 von Tabelle 1:

TABELLE 2
relative Standzeiterhöhung:

| Fräserwerkzeug | Verformung | | Stähle gemäß Tabelle 1 | | | |
|---|---|---|---|---|---|---|
| | üblich | Erfindung | 1 | 2 | 3 | 4 |
| Fräser 1 | 10-fach | | 100 | 100 | 100 | 100 |
| | | 10-fach | 133 | 134 | 127 | 141 |
| Fräser 2 | 8-fach | | 100 | 100 | 100 | 100 |
| | | 8-fach | 127 | 132 | 125 | 132 |

## Patentansprüche

1. Drehendes Fräs- bzw. Schneidwerkzeug aus ledeburitischem Stahl mit vorzugsweise Dicke von über 4 mm, insbesondere von 4—40 mm, und Durchmesser über 40 mm, insbesondere von 50—315 mm, aufweisenden, im wesentlichen scheibenförmigem, Werkzeugkörper mit einstückig mit ihm ausgebildeten Fräs- bzw. Schneidelementen, dadurch gekennzeichnet, daß das Werkzeug mit den Schneid- bzw. Fräselementen aus in mehr als zwei Bearbeitungsgängen in zumindest zwei auf entlang von bzw. parallel zu aufeinander in wesentlichen normalen Geraden (g1, g2), insbesondere Richtungen (R1, R2), verlaufende Gradienten (G1, G2) querschnittsflächen- bzw. dickenreduzierend verformten Blech (112), insbesondere aus Schnellarbeitsstahl, mit in zu den Scheiben-Flankenebenen im wesentlichen parallelen Ebenen weitgehend isotroper Karbid-Verteilung gefertigt ist.

2. Fräs- bzw. Schneidwerkzeug nach Anspruch 1, dadurch gekennzeichnet, daß es aus einem ledeburitischen Schnellarbeitsstahl mit 0,65—0,80 C, max. 0,45 Si, max. 0,40 Mn, 3,75—4,50 Cr, 0,90—1,30 V, 17,25—18,75 W, gefertigt ist.

3. Fräs- bzw. Schneidwerkzeug nach Anspruch 1, dadurch gekennzeichnet, daß es aus einem ledeburitischen Schnellarbeitsstahl mit 1,05—1,15 C, max. 0,45 Si, max. 0,40 Mn, 3,75—4,50 Cr, 9,00—10,00 Mo, 0,95—1,35 V, 1,15—1,85 W, 7,50—8,75 Co, gefertigt ist.

4. Fräs- bzw. Schneidwerkzeug nach Anspruch 1, dadurch gekennzeichnet, daß es aus einem

# EP 0 145 702 B1

ledeburitischen Schnellarbeitsstahl mit 0,78—0,94 C, max. 0,45 Si, max. 0,40 Mn, 3,75—4,50 Cr, 4,50—5,50 Mo, 1,70—2,20 V, 5,50—6,75 W, gefertigt ist.

5. Fräs- bzw. Scheidwerkzeug nach Anspruch 1, dadurch gekennzeichnet, daß es aus einem ledeburitischen Schnellarbeitsstahl mit 0,88—0,96 C, max. 0,45 Si, max. 0,40 Mn, 4,00—4,50 Cr, 4,70—5,20 Mo, 1,70—2,00 V, 6,00—6,70 W, 4,50—5,00 Co, gefertigt ist.

6. Verfahren zur Herstellung eines drehenden Fräs- bzw. Schneidwerkzeuges nach einem der Ansprüche 1 bis 5, dadurch gekennzeichnet, daß ein aus ledeburitischem Stahl, insbesondere Schnellarbeitsstahl, bestehendes Vormaterial (1) in warmem Zustand in mehr als zwei Bearbeitungsgängen in zumindest zwei, auf entlang von bzw. parallel zu aufeinander im wesentlichen normalen Geraden (g1, g2) verlaufenden Gradienten (G1, G2) querschnittsflächen- bzw. dickenreduzierend zu einem Blech (112) verformt wird, aus welchem der Werkzeugkörper mit den Fräs- bzw. Schneidelementen, gefertigt wird.

7. Verfahren nach Anspruch 6, dadurch gekennzeichnet, daß die querschnittsflächen- bzw. dickenreduzierenden Verformungen bei Temperaturen von 1150 bis 750°C vorgenommen werden.

8. Verfahren nach Anspruch 6 oder 7, dadurch gekennzeichnet, daß ein Verhältnis von Verformung in einer einem der Querschnitts- bzw. Dickenreduktions-Gradienten (G1, G2) entsprechenden Richtung zur Verformung in einer im wesentlichen dazu senkrechten, dem anderen Gradienten (G2, G1) entsprechenden Richtung von 0,8 bis 2,2 eingestellt wird.

9. Verfahren nach einem der Ansprüche 6 bis 8, dadurch gekennzeichnet, daß für Werkzeugkörper bzw. Werkzeuge mit Scheibendicken über 25 mm, insbesondere von 25 bis 40 mm, das Vormaterial bis zum Erhalt des Werkzeugbleches in mehreren Bearbeitungsgängen 6- bis 8-facher Verformung durch Walzen unterworfen wird.

10. Verfahren nach einem der Ansprüche 6 bis 9, dadurch gekennzeichnet, daß für Werkzeuge bzw. Werkzeugkörper mit Scheibendicken von unter 25 mm das Vormaterial bis zum Erhalt des Werkzeugbleches in mehreren Bearbeitungsgängen mindestens 10-facher Verformung durch Walzen unterworfen wird.


## Revendications

1. Fraise ou outil de coupe rotatif en acier lédeburitique présentant une épaisseur de préférence supérieure à 4 mm, en particulier de 4 à 40 mm, et un diamètre supérieur à 40 mm, en particulier de 50 à 315 mm, un corps d'outil sensiblement en forme de disque avec des éléments de fraisage et de coupe solidaires de ce dernier, caractérisé en ce que l'outil avec les éléments de coupe ou de fraisage est réalisé à partir d'une tôle (112), en particulier en acier rapide, transformée, par plus de deux opérations d'usinage, de manière à réduire la surface de section ou l'épaisseur en au moins deux gradients (G1, G2) disposés suivant ou parallèlement à des droites (g1, g2), en particulier des directions (R1, R2), sensiblement normales entre elles, avec une distribution de carbure amplement isotrope dans des plans sensiblement parallèles aux plans des flancs des disques.

2. Fraise ou outil de coupe suivant la revendication 1, caractérisé en ce qu'il est fabriqué en un acier rapide lédeburitique à 0,65—0,80 C, max. 0,45 Si, max. 0,40 Mn, 3,75—4,50 Cr, 0,90—1,30 V, 17,25—18,75 W.

3. Fraise ou outil de coupe suivant la revendication 1, caractérisé en ce qu'il est fabriqué en un acier rapide lédeburitique à 0,78—0,94 C, max. 0,45 Si, max. 0,40 Mn, 3,75—4,50 Cr, 9,00—10,00 Mo, 0,95—1,35 V, 1,15—1,85 W, 7,50—8,75 Co.

4. Fraise ou outil de coupe suivant la revendication 1, caractérisé en ce qu'il est fabriqué en un acier rapide lédeburitique à 1,05—1,15 C, max. 0,45 Si, max. 0.40 Mn, 3,75—4,50 Cr, 4,50—5,50 Mo, 1,70—2,20 V, 5,50—6,75 W.

5. Fraise ou outil de coupe suivant la revendication 1, caractérisé en ce qu'il est fabriqué en un acier rapide lédeburitique à 0,88—0,96 C, max. 0,45 Si, max. 0,40 Mn, 4,00—4,50 Cr, 4,70—5,20 Mo, 1,70—2,00 V, 6,00—6,70 W, 4,50—5,00 Co.

6. Procédé de fabrication d'une fraise ou outil de coupe rotatif suivant l'une des revendications 1 à 5, caractérisé en ce qu'un matériau préaffiné (1) en acier lédeburitique, en particulier acier rapide, est transformé à l'état chaud, par plus de deux opérations d'usinage, en réduction de la surface de section ou de l'épaisseur, en au moins deux gradients (G1, G2) suivant ou parallèlement à des droites (g1, g2), sensiblement normales entre elles, en une tôle (112) à partir de laquelle est fabriqué le corps de l'outil avec les éléments de fraisage ou de coupe.

7. Procédé suivant la revendication 6, caractérisé en ce que les transformations en réduction de la surface de section ou de l'épaisseur sont réalisées à des températures de 1150 à 750°C.

8. Procédé suivant la revendication 6 ou 7, caractérisé en ce qu'il est établi un rapport entre la transformation dans un sens correspondant à l'un des gradients (G1, G2) de réduction de la surface de section ou de l'épaisseur et la transformation dans un sens sensiblement perpendiculaire à ce dernier, correspondant à l'autre gradient (G2, G1), de 0,8 à 2,2.

9. Procédé suivant l'une des revendications 6 à 8, caractérisé en ce que, pour des corps d'outils ou des outils à épaisseur de disque de plus de 25 mm, en particulier de 25 à 40 mm, le matériau préaffiné subit,

5

jusqu'à l'obtention de la tôle de l'outil, une transformation par laminage en 6 à 8 étapes, en plusieurs phases d'usinage.

10. Procédé suivant l'une des revendications 6 à 9, caractérisé en ce que, pour des outils ou des corps d'outils à épaisseur de disque inférieure à 25 mm, le matériau préaffiné subit, jusqu'à l'obtention de la tôle de l'outil, une transformation par laminage en au moins 10 étapes, en plusieurs phases d'usinage.

**Claims**

1. Rotating milling or cutting tool made of ledeburitic steel, with a substantially disc-shaped tool body preferably having a thickness of more than 4 mm, in particular of 4—40 mm, and a diameter of more than 40 mm, in particular of 50—315 mm and having milling or cutting elements formed integrally therewith, characterised in that the tool with the cutting or milling elements is made of sheet (112), in particular of high-speed steel, shaped in cross-section surface-reducing or thickness-reducing manner in more than two operation phases in at least two gradients (G1, G2) running along or parallel to straight lines (g1, g2) which are substantially normal to each other, in particular directions (R1, R2) with largely isotropic carbide distribution in planes substantially parallel to the disc flank planes.

2. Milling or cutting tool according to Claim 1, characterised in that it is made of a ledeburitic high-speed steel with 0.65—0.80 C, max. 0.45 Si, max. 0.40 Mn, 3.75—4.50 Cr, 0.90—1.30 V, 17.25—18.75 W.

3. Milling or cutting tool according to Claim 1, characterised in that it is made of a ledeburitic high-speed steel with 1.05—1.15 C, max. 0.45 Si, max. 0.40 Mn, 3.75—4.50 Cr, 9.00—10.00 Mo, 0.95—1.35 V, 1.15—1.85 W, 7.50—8.75 Co.

4. Milling or cutting tool according to Claim 1, characterised in that it is made of a ledeburitic high-speed steel with 0.78—0.94 C, max. 0.45 Si, max. 0.40 Mn, 3.75—4.50 Cr, 4.50—5.50 Mo, 1.70—2.20 V, 5.50—6.75 W.

5. Milling or cutting tool according to Claim 1, characterised in that it is made of a ledeburitic high-speed steel with 0.88—0.96 C, max. 0.45 Si, max. 0.40 Mn, 4.00—4.50 Cr, 4.70—5.20 Mo, 1.70—2.00 V, 6.00—6.70 W, 4.50—5.00 Co.

6. Method for the production of a rotating milling or cutting tool according to one of Claims 1 to 5, characterised in that a starting material (1) made of ledeburitic steel, in particular high-speed steel, is shaped in cross-section surface-reducing or thickness-reducing manner in the warm state in more than two operation phases in at least two gradients (G1, G2) running along or parallel to straight lines (g1, g2) which are substantially normal to each other to form a sheet (112), from which the tool body with the milling or cutting elements is made.

7. Method according to Claim 6, characterised in that the cross-section surface-reducing or thickness-reducing deformation is carried out at temperatures of 1150 to 750°C.

8. Method according to Claim 6 or 7, characterised in that a ratio of deformation in a direction corresponding to one of the cross-section or thickness reduction gradients (G1, G2) to deformation in a direction substantially at right angles thereto and corresponding to the other gradient (G2, G1) of 0.8 to 2.2 is set.

9. Method according to one of Claims 6 to 8, characterised in that for tool bodies or tools having disc thicknesses of more than 25 mm, in particular of 25 to 40 mm, the starting material is subjected to deformation by a multiple of 6 to 8 by rollers in a plurality of operation phases until the tool sheet is obtained.

10. Method according to one of Claims 6 to 9, characterised in that for tools or tool bodies with disc thicknesses of less than 25 mm the starting material is subjected to deformation by at least a multiple of 10 by rollers in a plurality of operation phases until the tool sheet is obtained.

Fig. 1

Fig.2

Fig.3

Fig.4